Europäisches Patentamt

European Patent Office

Office européen des brevets

(19)

(11) Veröffentlichungsnummer: **0 038 872**
**B1**

(12) **EUROPÄISCHE PATENTSCHRIFT**

(45) Veröffentlichungstag der Patentschrift:
19.06.85

(51) Int. Cl.⁴: **B 62 B 3/10**

(21) Anmeldenummer: **80107515.1**

(22) Anmeldetag: **02.12.80**

(54) **Reinigungswagen.**

(30) Priorität: **29.04.80 DE 3016566**

(43) Veröffentlichungstag der Anmeldung:
**04.11.81 Patentblatt 81/44**

(45) Bekanntmachung des Hinweises auf die Patenterteilung:
**19.06.85 Patentblatt 85/25**

(84) Benannte Vertragsstaaten:
**AT BE CH FR IT LI NL**

(56) Entgegenhaltungen:
**DE - A - 1 216 759**
**DE - A - 2 614 535**
**DE - A - 2 800 094**
**GB - A - 1 148 211**
**US - A - 2 140 199**
**US - A - 3 041 026**
**US - A - 3 870 261**
**US - A - 3 893 699**
**US - A - 4 202 521**

(73) Patentinhaber: **Floordress Reinigungsgeräte GmbH,
Lorcher Strasse, D-7073 Lorch 2-Waldhausen (DE)**

(72) Erfinder: **Schunter, Roland, Birkenstrasse 9,
D-7073 Lorch-Waldhausen (DE)**

(74) Vertreter: **Berendt, Thomas, Dr.rer.nat. Dipl.-Chem. et al,
Patentanwälte Dr.rer.nat. Dipl.-Chem. Th. Berendt
Dr.Ing. Hans Leyh Innere Wiener Strasse 20/III,
D-8000 München 80 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die Erfindung betrifft einen Reinigungswagen zur Aufnahme von Reinigungsgeräten, mit einem mit Rädern versehenen Gestell, das einen im wesentlichen vertikalen Stützrahmen aufweist, an dessen oberen Ende wenigstens ein im wesentlichen horizontaler, etwa ringförmiger Halterahmen befestigt ist, in den ein Sack zur Aufnahme von Abfall od. dgl. einhängbar ist, dessen Öffnung durch einen Deckel verschließbar ist, der auf einer im wesentlichen horizontalen, am Stützrahmen angebrachten Achse schwenkbar und axial fixiert angeordnet ist.

Reinigungswagen der vorgenannten Art werden häufig bei der Reinigung von Bürogebäuden, Schulen, Krankenhäusern u. dgl. eingesetzt.

Die schwenkbaren Deckel sind axial auf der Achse fixiert. So zeigt die US-PS 2 870 261 einen Reinigungsbehälter mit einem schwenkbaren Deckel, dessen Achse auf beiden Seiten des Scharniers des Deckels mit einer Kröpfung versehen ist, um den Deckel axial festzulegen.

Die DE-OS 2 800 094 zeigt einen Müllbehälter mit einem rohrförmigen Scharnier, das innen mit einer Querwand versehen ist. Der Deckel ist mit Flanschen versehen, die hülsenförmige Ansätze haben, die in das rohrförmige Scharnier eingreifen, wobei einer dieser hülsenförmigen Ansätze mittels einer Schraube an der Querwand des Scharniers befestigt ist.

Die DE-OS 2 614 535 schließlich, zeigt einem fahrbaren, durch Klappdeckel verschließbaren Müllbehälter, dessen Deckel mit vier Armen versehen ist, von denen je zwei mittels Achszapfen in einem rohrförmigen Scharnier schwenkbar angeordnet sind. Die Achszapfen sind mit Ausdrehungen versehen, in welche nach innen gerichtete warzenförmige Vorsprünge des Scharniers eingreifen.

Nachteilig bei diesen bekannten Einrichtungen zur axialen Halterung der Deckel ist ihr großer technischer und konstruktiver Aufwand.

Die Erfindung sucht diese Nachteile zu vermeiden.

Ihr liegt daher die Aufgabe zugrunde, bei einem Reinigungswagen der eingangs genannten Art den oder die Deckel in Achsrichtung in einfacher Weise festzulegen, außerdem soll der Deckel leicht und ohne besondere Hilfsmittel auf die Achse aufsetzbar und abnehmbar sein.

Gemäß der Erfindung wird dies dadurch erreicht, daß die Achse mit einem Wulst versehen ist, der in eine entsprechende Aussparung eines Scharniers des Deckels eingreift, wenn das einseitig offene Scharnier über die Achse geschoben wird.

Die erfindungsgemäße Lösung erlaubt es, den Deckel mittels eines einzigen Wulstes axial zu fixieren. Sie ermöglicht es ferner, zwei Deckel auf einer Achse schwenkbar anzuordnen und mit je einem Wulst axial festzulegen.

Beispielsweise Ausführungsformen der Erfindung werden nachfolgend anhand der Zeichnung im einzelnen erläutert, in der

Fig. 1 eine Schrägansicht eines Reinigungswagens zeigt;

Fig. 2 zeigt ebenfalls in Schrägansicht einen Reinigungswagen mit zwei Halterahmen und zwei Deckeln.

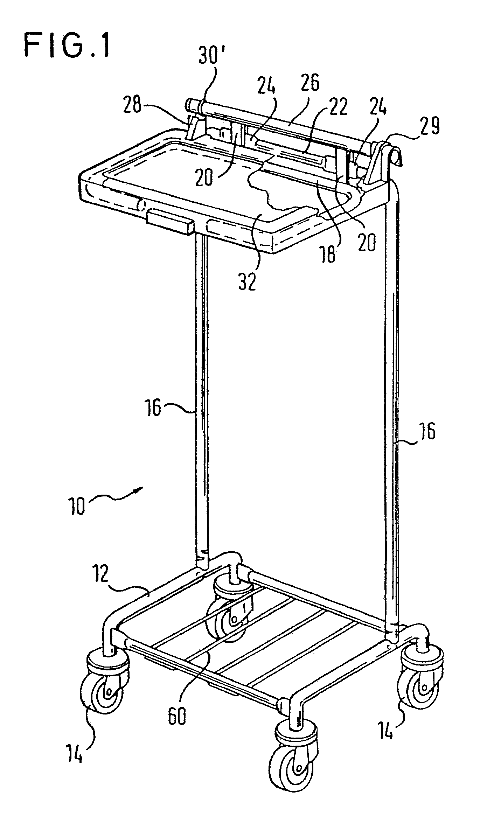

Fig. 1 zeigt einen Reinigungswagen 10, der aus einem mit Rädern 14 versehenen Gestell 12 und einem Stützrahmen 16 aufgebaut ist. Das Gestell und der Stützrahmen sind zweckmäßigerweise aus Rohren zusammengebaut. Das Gestell 12 hat einen Boden oder Rost 60 zur Abstützung eines nicht-gezeigten Abfallsackes, der in einen Halterahmen 18 einhängbar ist, der etwa in Form eines offenen Ringes ausgebildet ist, wobei unter dem Begriff Ring auch die dargestellte Rechteckform zu verstehen ist. Der Stützrahmen 16 ist im wesentlichen senkrecht und der Halterahmen 18 im wesentlichen waagrecht angeordnet. Der Stützrahmen 16 ist an seinen oberen Enden durch einen im wesentlichen horizontalen Querholm 22 verbunden oder geschlossen, welcher zwei im Abstand voneinander angeordnete Abflachungen 24 aufweist, deren Ebene vertikal liegt und über die je eine Lasche 20 geschoben oder geklemmt ist, die ihrerseits mit dem Halterahmen 18 verbunden, z. B. verschweißt ist.

Der Halterahmen 18 wird somit mittels seiner Laschen 20 über die Abflachungen 24 des Querholmes 22 geschoben und eingehängt und damit gehalten.

An den oberen Enden der Laschen 20 ist eine im wesentlichen horizontal verlaufende Achse 26 angebracht, z. B. angeschweißt, die zweckmäßigerweise ebenfalls rohrförmig ausgebildet ist.

Die Achse 26 dient zur schwenkbaren Halterung eines Deckels 32, der dazu dient, die Öffnung des nicht-gezeigten Abfallsackes, d. h. die Fläche innerhalb des Halterahmens 18 abzudecken.

Der Deckel 32 ist an seinem hinteren Ende mit zwei im Abstand voneinander liegenden, einseitig offenen Scharnieren 28, 29 versehen, welche einstückig am Deckel 32 angeformt sein können und die rohrförmige Achse 26 von oben her umgreifen, so daß der Deckel 32 um diese Achse geschwenkt und damit die Öffnung des nicht-gezeigten Sackes geöffnet und geschlossen werden kann.

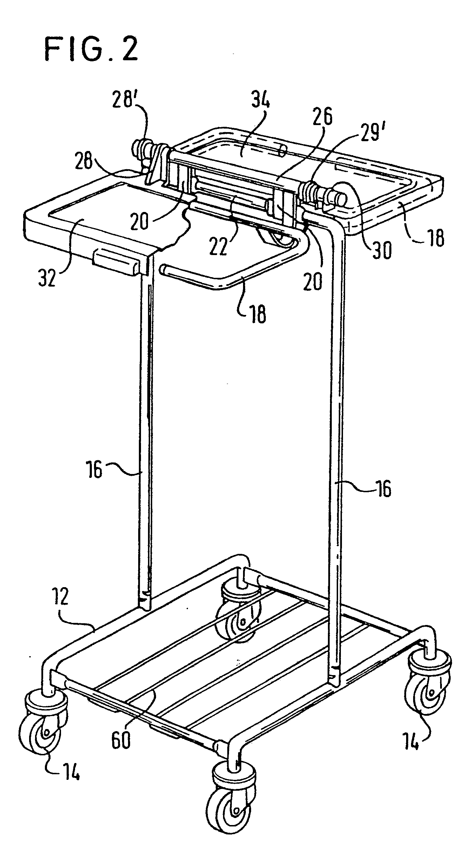

Um nun den Deckel 32 axial, d. h. in Längsrichtung der Achse 26 gegen Verschiebung festzulegen und zu halten, ist die Achse 26 mit einem Wulst 30 (Fig. 2) bzw. 30' versehen, der in Umfangsrichtung der Achse 26 verläuft.

In Fig. 1 ist der Wulst 30 nicht sichtbar, da das Scharnier 29 des Deckels 32 die Achse 26 umgreift und der Wulst 30 daher durch das Scharnier 29 überdeckt wird. Das Scharnier 29 hat eine entsprechende, der Form des Wulstes angepaßte Vertiefung oder Aussparung, d. h. eine Nut oder eine Rille, in welcher der Wulst 30 eingreift, so daß hierdurch eine formschlüssige Verbindung zwischen der Achse 26 und dem Deckel 32

bzw. seinem Scharnier 29 in Achsrichtung erzielt wird.

Bei der Ausführungsform nach Fig. 2 handelt es sich um einen Reinigungswagen, der mit zwei Halterahmen 18 versehen ist, von denen je einer auf jeder Seite des Stützrahmens 16 angeordnet ist. Jeder der beiden Halterahmen 18 ist mittels Laschen 20 in derselben Weise am Querholm 22 befestigt, wie in Verbindung mit Fig. 1 beschrieben wurde.

In Fig. 2 ist das Scharnier 29 des Deckels 32 nicht dargestellt, jedoch sein Scharnier 28, das in Fig. 1 nur abgebrochen gezeigt ist.

Der Wulst 30 der mit dem Scharnier 29 zusammenwirkt, ist deshalb in Fig. 2 sichtbar.

Die Scharniere des zweiten Deckels 34 sind in Fig. 2 mit 28' und 29' bezeichnet. Der Scharnier 28' wirkt dabei mit dem in Fig. 1 sichtbaren Wulst 30' zusammen, der an dem zum Wulst 30 entgegengesetzten Ende der Achse 26 in derselben Weise wie der Wulst 30 ausgebildet ist. Das Scharnier 28' des Deckels 34 hat hierzu ebenfalls eine entsprechende Aussparung oder Nut, in welche der Wulst 30' eingreift, so daß eine formschlüssige Verbindung zwischen der Achse 26 und dem Scharnier 28' des Deckels 34 gebildet wird.

Jeder der Deckel 32, 34 wird somit durch einen Wulst 30 bzw. 30' in Achsrichtung gehalten, wobei jeder dieser Wulste in eine entsprechende Nut oder Rille in jeweils einem der Scharniere des jeweiligen Deckels 32 bzw. 34 eingreift.

Die Scharniere sind an den Deckeln so angeordnet, daß im eingebauten Zustand, wie Fig. 2 zeigt, die Deckel 32 und 34 seitlich in Flucht miteinander liegen.

## Patentansprüche

1. Reinigungswagen zur Aufnahme von Reinigungsgeräten, mit einem mit Rädern versehenen Gestell, das einen im wesentlichen vertikalen Stützrahmen aufweist, an dessen oberen Ende wenigstens ein im wesentlichen horizontaler, etwa ringförmiger Halterahmen befestigt ist, in den ein Sack zur Aufnahme von Abfall od. dgl. einhängbar ist, dessen Öffnung durch einen Deckel verschließbar ist, der auf einer im wesentlichen horizontalen, am Stützrahmen angebrachten Achse schwenkbar und axial fixiert angeordnet ist, dadurch gekennzeichnet, daß die Achse (26) mit einem Wulst (30) versehen ist, der in eine entsprechende Aussparung eines Scharniers (29) des Deckels (32) eingreift, wenn das einseitig offene Scharnier (29) über die Achse (26) geschoben wird.

2. Reinigungswagen nach Anspruch 1, wobei auf beiden Seiten des Stützrahmens je ein Halterahmen mit Deckel angeordnet ist, dadurch gekennzeichnet, daß an jedem Ende der Achse (26) je ein Wulst (30, 30') ausgebildet ist, der jeweils in ein Scharnier je eines Deckels (32, 34) eingreift.

## Claims

1. Cleaning trolley for the accomodation of cleaning appliances with a wheeled trestle presenting an essentially vertical supporting frame, fastened to the upper end of which is one at least essentially horizontal and about ring-shaped holding frame which serves to receive a suspended bag for garbage or the like whose opening can be closed by means of a lid mounted pivotically on an essentially horizontal axis arranged on the supporting frame, whereby said cover is fixed in axial direction, characterized in that the axis (26) has been provided with a swelling (30) engaging in a corresponding recess of a hinge (29) of the lid (30) whenever the hinge (29), open on one side, is being moved across the axis (26).

2. Cleaning trolley in accordance with claim 1, in connection with which on both sides of the supporting frame one holding frame with lid is arranged respectively, characterized in that at both ends of the axis (26) a swelling (30, 30') has been provided, each one of the said swellings engaging in a hinge of a respective lid (32, 24).

## Revendications

1. Chariot de nettoyage destiné à recevoir des accessoires de nettoyage, avec bâti doté de roues et présentant un cadre porteur essenciellement vertical, à la partie supérieure duquel est fixé au moins un cadre support essenciellement horizontal, de forme à peu annulaire, et servant à recevoir un sac à ordures ou similaire, dont l'ouverture peut être fermée par un couvercle articulé sur un axe essenciellement horizontal, disposé sur le cadre porteur, le couvercle étant immobilisé dans le sens de cet axe, CARACTERISÈ EN CE QUE l'axe (26) est doté d'un renflement (30) s'engageant dans un évidement correspondant d'une charnière (29) du couvercle (32), quand la charnière, ouverte d'un côté, est poussée par-dessus l'axe (26).

2. Chariot de nettoyage selon la revendication 1, le cadre porteur étant flanqué des deux côtés d'un cadre support avec couvercle respectivement, CARACTERISE EN CE QU'à chaque extrémité de l'axe (26) est disposé un renflement (30, 30'), chaque renflement s'engageant dans la charnière d'un couvercle (32, 24).

# FIG.1

# FIG. 2